# EUROPÄISCHE PATENTSCHRIFT

(11) **EP 0 608 507 B1**
(45) Veröffentlichungstag und Bekanntmachung des Hinweises auf die Patenterteilung: **21.05.1997**
(21) Anmeldenummer: 93118999.7
(22) Anmeldetag: 25.11.1993
(51) Int. Cl.: B65G 27/02, B65G 27/34

(54) **Schwingzuführgerät für gleichartige Werkstücke**
Vibratory feeding apparatus for similar objects
Appareil d'alimentation vibrant pour objets similaires

(30) Priorität: 26.11.1992 DE 4239683
(43) Veröffentlichungstag der Anmeldung: 03.08.1994
(73) Patentinhaber: Feldpausch GmbH & Co. KG., D-5880 Lüdenscheid (DE)
(72) Erfinder: Weidlich, Roland Guido, D-58511 Lüdenscheid (DE)
(74) Vertreter: Zinngrebe, Horst, Dr.rer.nat.

(56) Entgegenhaltungen:
- FR-A- 1 429 087
- GB-A- 1 048 827
- US-A- 4 739 873
- PATENT ABSTRACTS OF JAPAN vol. 9, no. 42 (M-359) (1765) 22. Februar 1985 & JP-A-59 182 120 (SHINKO DENKI K.K.) 16. Oktober 1984
- PATENT ABSTRACTS OF JAPAN vol. 10, no. 315 (M-529) 25. Oktober 1986 & JP-A-61 124 417 (SHINKO ELECTRIC CO. LTD.) 12. Juni 1986

## Beschreibung

Die Erfindung betrifft ein Schwingzuführgerät nach dem Oberbegriff des Anspruches 1.

Bei dem soweit aus der US Patentschrift 4,739,873 bekannten Schwingzuführgerät werden als Werkstücke Sitzfedern ungeordnet in den Topf eingefühlt, die aufgrund des Schwingantriebs auf der ansteigenden Rampe hochsteigen und an einem Ausgabeende des Topfes bei richtiger Orientierung auf die Werkstückausgabeschiene gelangen. Um die richtige Orientierung der Werkstücke sicherzustellen, sind an der Rampe und an der Ausgabeöffnung verschiedene Schikanen ausgebildet, die fehlorientierte Werkstücke aussondern und in den Topf fallen lassen.

Sollen mit diesem Schwingzuführgerät Werktstücke anderer Größe und Gestalt gefördert werden, müssen die Schikanen im Topf geändert werden.

Aus der französischen Patentschrift 1 429 087 ist ein Schwingteller bekannt, der in einer Ebene zugeführte Bonbons dem Eingang einer separat schwingangetriebenen Ausgabeschiene zuführt. Die richtige Orientierung der Bonbons wird längs ihres Vorschubweges in den Schwingteller erreicht, wobei die Größe des Einlasses in die Ausgabeschiene an die Form der Bonbons angepaßt werden kann.

Bei der aus der französischen Patentschrift 1 364 153 bekannten Vorrichtung der genannten Art steigen die Werkstücke unter der Wirkung des ersten Schwingantriebs die Rampe in einer Reihe hoch, um einer nicht näher erläuterten Weiterverarbeitungseinrichtung zugeführt zu werden. Diese Vorrichtung hat den Nachteil, daß die Werkstücke in unregelmäßiger Orientierung weitergeleitet werden, was deren unmittelbare Verwendung erschwert.

Der Erfindung liegt daher die Aufgabe zugrunde, die eingangs genannte Vorrichtung so zu gestalten, daß ihre Anpassung an die Vereinzelung und Orientierung von Werkstücken unterschiedlicher Abmessungen und Gestalt vereinfacht wird.

Dazu dient das Schwingzuführgerät nach dem Anspruch 1. Damit wird erreicht, daß die Werktstücke, beispielsweise Schrauben, in stets gleicher Orientierung aus der Werkstückabgabeschiene ausgegeben werden und die in diese von der Rampe in unrichtige Orientierung gelangenden und von den Schikanen abgewiesenen Werkstücke wieder in den Topf zurückfallen.

In besonders einfacher Ausgestaltung der Erfindung erstreckt sich die gradlinige Werkstückausgabeschiene durch die Seitenwand des Topfes, wobei der Schienenabschnitt mit den Abweisschikanen sich innerhalb des Topfes befindet.

Bevorzugt ist die Werkstückausgabeschiene mehrspurig ausgeführt, so daß mehrere Weiterbehandlungsstationen durch jeweils eine Spur gleichzeitig mit gleich orientierten Werkstücken bedient werden können.

Die Erfindung wird nachstehend anhand des in der beigefügten Zeichnung dargestellten Ausführungsbeispiels im einzelnen beschrieben. Es zeigen:
- Fig. 1:: eine schematische Seitenansicht von Teilen eines mit den Merkmalen der Erfindung ausgerüsteten Schwingzuführgerätes, wobei zur besseren Übersichtlichkeit nur die linearen Schwingsegmente angegeben sind;
- Fig. 2:: eine teilweise geschnittene Ansicht der Vorrichtung nach Fig. 1 in Längsrichtung der Werkstückausgabeschiene mit dem Topf und dem zugehörigen Schwingantrieb; und
- Fig. 3:: eine schematische Draufsicht auf den Topf und die Werkstückausgabeschiene ohne Untergestell.

Das im Ganzen mit 1 bezeichnete Schwingzuführgerät zum Zuführen von nicht dargestellten Schrauben oder dergleichen Werkstücken ruht auf einem Gestell, von dem nur das massive obere Rahmenteil 10 schematisch dargestellt ist. Das Rahmenteil 10 ist mit den übrigen Gestellteilen verbunden, die im einzelnen nicht dargestellt sind und an den mit den Vertikallinien angedeuteten Stellen entweder auf dem Boden 16 verankert sind oder auf dem Boden 16 frei stehen. An dem oberen Rahmenteil 10 sind zwei gegenüberliegende massive Ausleger 20, 22 befestigt, von denen jeder auf seinem freien Ende ein elektromagnetisches Schwingsegment 30, 40 trägt. Das Schwingsegment 30 weist einen Elektromagneten 32 auf, der über einen Gummipuffer 34 auf dem Ausleger 20 befestigt ist. An dem beweglichen Anker 36 ist ein Federpaket 38 befestigt, welches seinerseits an einer Schraubauflage 52 verankert ist, welche an der Unterseite einer Werkstückausgabeschiene 50 sitzt. Im übrigen ist das Schwingsegment so ausgeführt, wie das beispielsweise in der deutschen Patentschrift 28 06 331 im einzelnen erläutert ist.

Das Schwingsegment 40 ist in gleicher Weise wie das Schwingsegment 30 aufgebaut, wobei das Federpaket des Schwingsegments 40 den gleichen Winkel zur Längsrichtung der Schiene 50 einschließt wie das Federpaket 38. Beide Schwingsegmente 30 und 40 werden synchron von einer nicht dargestellten und beispielsweise im Gestell untergebrachten Steuereinrichtung mit dem erforderlichen Strom versorgt, so daß beide Schwingsegmente 30, 40 einen elektromagnetischen Schwingantrieb für die Schiene 50 bilden und dieser eine hin- und hergehende lineare Bewegung in Längsrichtung der Schiene 50 erteilen.

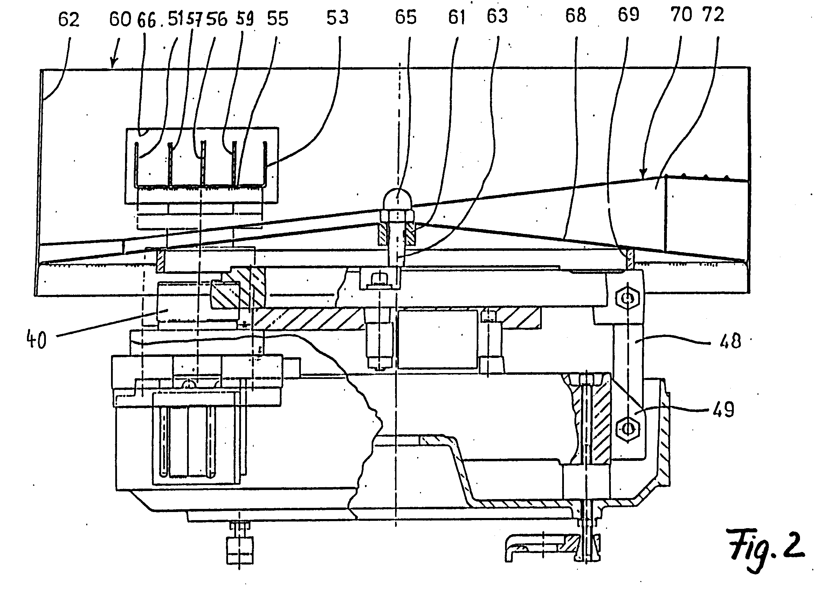

Die Schiene 50, wie Fig. 2 zeigt, besteht aus mehreren parallelen, gleich breiten Spuren 81, 83, 85, 87, von denen jede die Form eines U-förmigen, oben offenen Kanals mit den Seitenwänden 51, 53, 56, 57, 59 und dem gemeinsamen Boden 55 hat. Die Schiene 50 durchsetzt eine Seitenwand 62 eines im Ganzen mit 60 bezeichneten Schwingtopfes, und zwar durch gegenüberliegende Öffnungen 64, 66, die zu diesem Zweck in die Seitenwand 62 geschnitten sind.

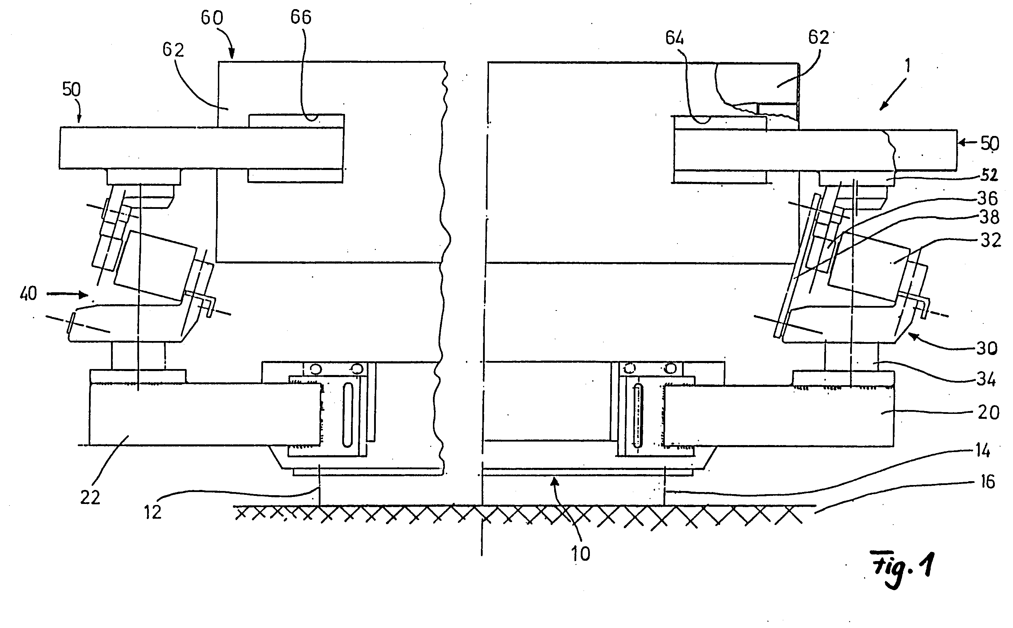

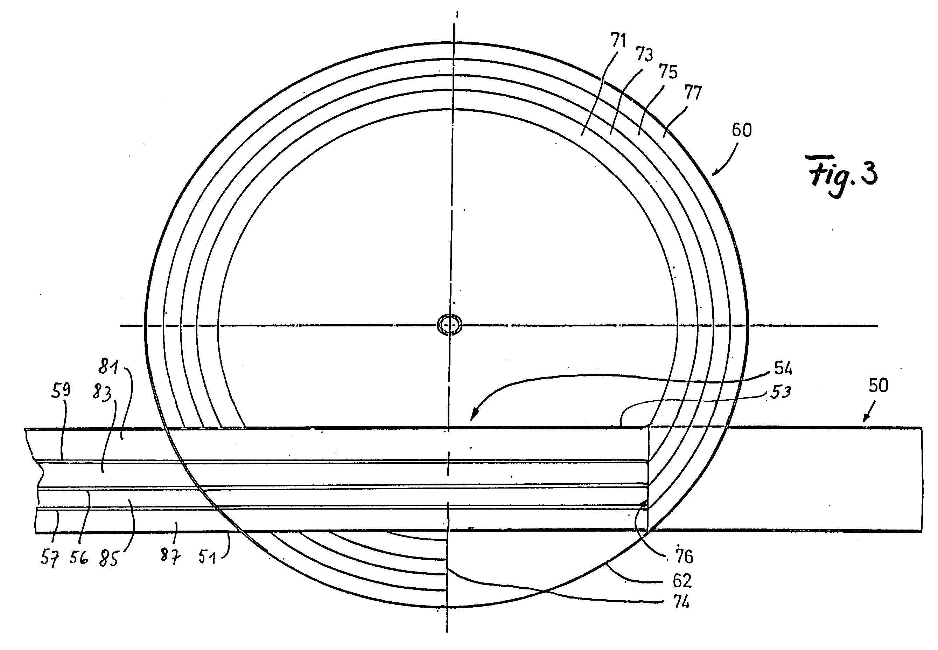

Die Höhe der gleichhohen Seitenwände 51, 53 ist so bemessen, daß beispielsweise gleich orientierte Schrauben, die längs der Schiene 50 in deren Spuren 81, 83, 85, 87 gemäß den Darstellungen in Figuren 1 und 3 von rechts nach links gefördert werden, aus den Spuren seitlich nicht herausfallen können.

Der Schwingtopf 60 selbst ist in Draufsicht rund, wobei sein Boden 68 von der Außenwand 62 ausgehend nach innen zur Mitte leicht keglig ansteigt. In der Mitte des Bodens ist der Topf 60 von einer Hülse 61 unterfaßt, von einem gestellfesten Zapfen 63 durchdrungen und auf diesem mittels einer Überwurfmutter 65 gesichert. Der Boden 68 des Schwingtopfes 60 ist auf einem ringförmigen Rahmen 69 befestigt, an welchem die oberen Enden mehrerer Federpakete mehrerer Schwingsegmente verankert sind, von denen ein Federpaket mit 48 bezeichnet ist. Das untere Ende 49 jedes der Federpakete 48 ist an je einem beweglichen Anker je eines Schwingsegmentes befestigt, welches wie in der erwähnten Patentschrift 28 06 331 ausgeführt ist und in Konstruktion und Wirkungsweise den Schwingsegmenten 30, 40 gleicht. Die Federpakete 48 sind in Umfangsrichtung des runden Schwingtopfes 60 gleich beabstandet verteilt und gegen den Schwingtopf 60 schräg gestellt. Beispielsweise sind längs des Umfangs des Rahmens 69 drei Federpakete 48 verankert, so daß der Schwingtopf 60 von drei Schwingsegmenten synchron in seiner Umfangsrichtung in Schwingungen versetzt wird. Dazu sind die Federpakete 48 gegen den zur Seitenwand 62 querliegenden Rahmen 69 unter jeweils gleichem Winkel schräggestellt. Wie insbesondere aus Fig. 2 hervorgeht, durchdringt die Schiene 50 den Schwingtopf 60 in einer Höhe zwischen Boden 68 und oberem Ende der Seitenwand, so daß unterhalb des innerhalb des Schwingtopfes 60 befindlichen Schienenabschnitts 54 sich sowohl der Boden 69 wie auch eine noch zu erläuternde Rampe 70 erstrecken können.

Die Rampe 70 ist längs eines wesentlichen Umfangsabschnittes der Seitenwand 62 ausgebildet und steigt in Umfangsrichtung des Topfes bei der Darstellung gemäß Fig. 3 in Uhrzeigerrrichtung schwach an. Wie Fig. 3 zeigt, endet die Rampe oberhalb der Schiene 50 dicht hinter der Öffnung 64. Die Rampe weist auf ihrer Oberseite vier parallele Bahnen 71, 73, 75, 77 auf, die durch leichte, sich in Längsrichtung der Rampe erstreckende Erhebungen gegeneinander abgegrenzt sind. Die Anzahl der Bahnen 71, 73, 75, 77 gleicht der Anzahl der Spuren 81, 83, 85, 87 der Schiene 50, so daß je eine Bahn über je einer Spur bei 76 endet. Die Rampe 70 weist an ihrem von der Seitenwand entfernten Umfangsrand eine zur Seitenwand 62 parallele Wand 72 auf, die mit dem Boden 68 verbunden ist und sich längs der Rampe 70 erstreckt. Der Rampenanfang 74 geht glatt, d.h. ohne Stufe in den Boden 68 über.

Zum Betrieb des Schwingzuführgerätes 1 werden auf den Boden 68 in beliebiger Menge ungeordnete Schrauben aufgebracht und die elektromagnetischen Schwingantriebe sowohl für den Schwingtopf 60 wie auch für die Schiene 50 eingeschaltet. Durch die in Umfangsrichtung erfolgende Schwingbewegung des Schwingtopfes 60 werden die Schrauben in Umfangsrichtung, also bei der Darstellung nach Fig. 3 im Uhrzeigersinn gefördert und vermöge der nach außen abwärts vorhandenen Neigung des Bodens 68 in Richtung auf die Seitenwand 62 beziehungsweise die Wand 72 gedrängt. Die Schrauben werden dann zunehmend auf der Rampe 70 hochsteigen und vermöge der Stärke der Schwingbewegungen des Schwingtopfes 60 längs der Rampe 70 beziehungsweise längs deren Bahnen 71, 73, 75, 77 aufwärts wandern. Am Ende 76 der Rampe 70, das sich über den Spuren der Schiene 50 befindet, fallen die Schrauben über die Kante der Rampe auf die Schiene 50 nieder und werden längs der Schiene 50 von rechts nach links gefördert. Nicht dargestellt sind an den Spuren 81, 83, 85, 87 angebrachte Abweisschikanen, die der Form der zu fördernden Werkstücke, im vorliegenden Beispiel also der Schrauben angepaßt sind und fehlorientierte Schrauben aus der Spur in den Topf abweisen. Diese Abweisschikanen befinden sich am Abschnitt 54 der Schiene 50.

Die beschriebene Vorrichtung hat den Vorteil einer sehr kompakten Bauweise, die dennoch zwei unterschiedliche Schwingantriebe in sich vereinigt. Darüber hinaus fallen alle abgewiesenen, weil unrichtig orientierten Schrauben wieder in den Schwingtopf 60 zurück.

## Patentansprüche

1. Schwingzuführgerät für gleichartige Werkstücke, das einen mit einem ersten Schwingantrieb gekoppelten Topf (60) zur Aufnahme der ungeordneten Werkstücke aufweist, an dessen Wand (62) eine ansteigende Rampe (70) ausgebildet ist, die an einer mit einem zweiten Schwingantrieb (30, 40) gekoppelten Werkstückausgabeschiene (50) endet, wobei Abweisschikanen zum Ausscheiden unrichtig orientierter Werkstücke vorgesehen sind, dadurch gekennzeichnet, daß die Rampe (70) über der den Topf (60) kreuzenden Werkstückausgabeschiene (50) endet, welche über dem Topf (60) einen mit Abweisschikanen versehenen Abschnitt (54) aufweist.

2. Schwingzuführgerät nach Anspruch 1, dadurch gekennzeichnet, daß die Werkstückausgabeschiene (50) die Seitenwand (62) des Topfes (60) durchdringt, wobei der Abschnitt (54) mit den Abweisschikanen sich innerhalb des Topfes (60) befindet.

3. Schwingzuführgerät nach Anspruch 1 oder 2, dadurch gekennzeichnet, daß die Werkstückausgabeschiene (50) mehrere parallele Spuren (81, 83, 85, 87) aufweist.

4. Schwingzuführgerät nach einem der Ansprüche 1 bis 3, dadurch gekennzeichnet, daß die Rampe (70) mit mehreren parallelen Bahnen (71, 73, 75, 77) versehen ist, von denen jede über jeweils einer Spur (81, 83, 85, 87) der Werkstückausgabeschiene (50) endet.

## Claims

1. Vibratory feeding apparatus for similar objects showing a pot (60), coupled with a first vibration drive for receiving disordered objects, on the wall (62) of which pot an ascending ramp (70) is realized which ends on a rail for the object delivery (50) coupled with a second vibration drive (30, 40), while reject baffles are provided for in order to sort out the objects which have not been properly orientated, characterized in that the ramp (70) ends above the rail for object delivery (50) which crosses the pot (60), which rail shows a portion (54) provided with reject baffles above the pot (60).

2. Vibratory feeding apparatus according to claim 1, characterized in that the rail for object delivery (50) penetrates through the side wall (62) of the pot (60), the portion (54) with the reject baffles being inside the pot (60).

3. Vibratory feeding apparatus according to claim 1 or 2, characterized in that the rail for objects delivery (50) shows several parallel tracks (81, 83, 85, 87).

4. Vibratory feeding apparatus according to one of the claims 1 to 3, characterized in that the ramp (70) is provided with several parallel paths (71, 73, 75, 77) each of which ending above a track (81, 83, 85, 87) of the rail for object delivery respectively.

## Revendications

1. Appareil d'alimentation vibrant pour objets similaires, présentant un pot (60) accouplé à un premier entraînement de vibration pour recevoir des objets non ordonnés, sur la paroi (62) duquel une rampe (70) montante est réalisée qui se termine sur un rail (50) de distribution des objets (50) accouplé à un deuxième entraînement (30, 40), des chicanes de rebut des objets orientés dans le mauvais sens étant prévues, caractérisé en ce que la rampe (70) se termine au-dessus du rail de distribution des objets (60) croisant le pot (60), lequel rail présente une portion (54) munie de chicanes de rebut au-dessus du pot (60).

2. Appareil d'alimentation vibrant salon la revendication 1, caractérisé en ce que le rail de distribution des objets (50) pénètre dans la paroi latérale (62) du pot (60), la portion (54) avec les chicanes de rebut se trouvant à l'intérieur du pot (60).

3. Appareil d'alimentation selon la revendication 1 ou 2, caractérisé en ce que le rail de distribution des objets (50) présente plusieurs voies parallèles (81, 83, 85, 87).

4. Appareil d'alimentation d'après l'une des revendications 1 à 3, caractérisé en ce que la rampe (70) est équipée de plusieurs pistes parallèles (71, 73, 75, 77) dont chacune se termine respectivement au-dessus d'une voie de rail de distribution d'objets (81, 83, 85, 87).
